# EUROPÄISCHE PATENTSCHRIFT

(11) **EP 2 753 899 B1**
(45) Veröffentlichungstag und Bekanntmachung des Hinweises auf die Patenterteilung: **24.01.2018**
(21) Anmeldenummer: 12756205.6
(22) Anmeldetag: 07.09.2012
(51) Int. Cl.: G01D 5/00, G01D 5/22

(54) **AMPLITUDENAUSWERTUNG MITTELS GOERTZEL-ALGORITHMUS IN EINEM DIFFERENZTRAFO-WEGSENSOR**
AMPLITUDE EVALUATION BY MEANS OF A GOERTZEL ALGORITHM IN A DIFFERENTIAL TRANSFORMER DISPLACEMENT SENSOR
ÉVALUATION D'AMPLITUDE AU MOYEN D'UN ALGORITHME DE GOERTZEL DANS UN CAPTEUR DE DÉPLACEMENT À TRANSFORMATEUR DIFFÉRENTIEL

(30) Priorität: 09.09.2011 DE 102011082462
(43) Veröffentlichungstag der Anmeldung: 16.07.2014
(73) Patentinhaber: Continental Teves AG&Co. Ohg, 60488 Frankfurt (DE)
(72) Erfinder: GRUNWALD, Frank, 61440 Oberursel (DE); LEHMANN, Sören, 65934 Frankfurt (DE)
(86) Internationale Anmeldenummer: PCT/EP2012/067575
(87) Internationale Veröffentlichungsnummer: WO 2013/034739

(56) Entgegenhaltungen:
- DE-A1- 2 325 752
- DE-A1-102008 029 839
- US-A- 5 818 296
- US-B1- 7 248 994
- Shlomo Engelberg: "Digital Signal Processing" In: "Digital Signal Processing", 31. Dezember 2008 (2008-12-31), Springer, XP055048323, ISBN: 978-1-84-800118-3 Seite 203, DOI: 10.1007/978-1-84800-119-0_30, Summary
- D Crescini ET AL: "Application of an FFT-based algorithm to signal processing of LVDT position sensors", IEEE Transactions on Instrumentation and Measurement, 5 October 1998 (1998-10-05), pages 1119-1123, XP055319912, DOI: 10.1109/19.746567 Retrieved from the Internet: URL:http://ieeexplore.ieee.org/ielx4/19/16 119/00746567.pdf?tp=&arnumber=746567&isnum ber=16119 [retrieved on 2016-11-16]

## Beschreibung

Die Erfindung betrifft eine Wegsensoranordnung gemäß Oberbegriff von Anspruch 1 sowie die Verwendung der Wegsensoranordnung in Kraftfahrzeugen.

Magnetische Wegsensoranordnungen mit einer Primärspule und zwei Sekundärspulen, denen ein weichmagnetisches Kopplungselement zugeordnet ist, welches durch das magnetische Feld eines Positionsgebermagneten zur Wegmessung lokal so beeinflusst wird, dass die Relativposition zwischen Positionsgebermagnet und Kopplungselement bestimmt werden kann, sind in den Druckschriften EP 0 693 673 A2, EP 0 238 922 A1 und DE 2 325 752 beschrieben.

Die Druckschrift : D Crescini et Al "Application of an FFTbased algorithm to signal processing of LVDT position sensors", IEEE Transactions on Instrumentation and Measurement, 5. Oktober 1998 Seiten 1119-1123 offenbart einen Wegsensor mit Primärspule, Sekundärspule und einer Signalverarbeitungseinheit, wobei ein Görtzel-Algorithmus benützt wird. Außerdem sind Differenztrafo- Wegsensoren bekannt. Diese gibt es beispielsweise als LVDT "Linear Variable Differential Transformer" ausgebildet, wobei ein weichmagnetischer Kern der primär- und sekundärseitigen Spulen bewegt wird und die Bewegungsauslenkung dieses weichmagnetischen Kerns erfasst wird.

Für eine digitale Wegmessung ist es bekannt die elektrische Wechselspannung an der ersten und der zweiten Sekundärspule jeweils zu digitalisieren und in Abhängigkeit der Frequenz des Anregestroms bzw. der Anregespannung durch/an die/der Primärspule digital auszuwerten und dabei die Position bzw. Auslenkung bzw. den zu erfassenden Weg zu ermitteln.

Die Erfindung hat sich die Aufgabe gestellt eine Wegsensoranordnung vorzuschlagen, welche eine digitale Auswertung wenigstens einer elektrischen Größe der beiden Sekundärspulen durchführt und dabei die Position und/oder Auslenkung bzw. den zu erfassenden Weg in Abhängigkeit der elektrischen Anregung der Primärspule in relativ einfacher und/oder kostengünstiger Weise ermittelt.

Diese Aufgabe wird erfindungsgemäß gelöst durch die Wegsensoranordnung gemäß Anspruch 1.

Unter der elektrischen Größe an den beiden Sekundärspulen wird vorzugsweise jeweils die elektrische Spannung an der ersten und zweiten Sekundärspule verstanden.

Es ist bevorzugt, dass die Wegsensoranordnung mindestens ein erstes Verschiebeelement aufweist, umfassend zumindest einen ersten Positionsgebermagnet, wobei das erste Verschiebeelement entlang einer Messrichtung relativ zu dem weichmagnetischen Kopplungselement verschiebbar angeordnet ist und die Primärspule und die Sekundärspulen mit dem weichmagnetischen Kopplungselement magnetisch gekoppelt sind und wobei das durch den ersten Positionsgebermagneten erzeugte Magnetfeld das Kopplungselement zumindest lokal so beeinflusst, dass die Relativposition zwischen dem ersten Verschiebeelement und dem weichmagnetischen Kopplungselement bzw. die Auslenkung bzw. der Weg des Verschiebeelements durch mindestens eine der Sekundärspulen direkt oder indirekt erfasst wird.

Unter dem Positionsgebermagneten wird bevorzugt ein Permanentmagnet verstanden und alternativ vorzugsweise ein Elektromagnet.

Alternativ vorzugsweise ist die Wegsensoranordnung als Differenztrafo-Wegsensor ausgebildet, insbesondere als LVDT "Linear Variable Differential Transformer" ausgebildet ist, wobei das weichmagnetische Kopplungselement bewegbar ausgebildet ist und die Position und/oder Auslenkung dieses Kopplungselements erfasst wird.

Es ist zweckmäßig, dass die Wegsensoranordnung wie folgt ausgebildet ist: Wegsensoranordnung, umfassend zumindest eine Primärspule, wenigstens zwei Sekundärspulen, mindestens ein weichmagnetisches Kopplungselement und mindestens ein erstes Verschiebeelement, umfassend zumindest einen ersten Positionsgebermagnet, wobei das erste Verschiebeelement entlang einer Messrichtung relativ zu dem weichmagnetischen Kopplungselement verschiebbar angeordnet ist und die Primärspule und die Sekundärspulen mit dem weichmagnetischen Kopplungselement magnetisch gekoppelt sind und wobei das durch den ersten Positionsgebermagneten erzeugte Magnetfeld das Kopplungselement zumindest lokal so beeinflusst, dass die Relativposition zwischen dem ersten Verschiebeelement und dem weichmagnetischen Kopplungselement durch mindestens eine der Sekundärspulen direkt oder indirekt erfasst wird, wobei die Wegsensoranordnung eine Signalverarbeitungseinheit umfasst, welche so ausgebildet ist, dass sie eine digitale Signalverarbeitung wenigstens einer elektrischen Größe der beiden Sekundärspulen durchführt und die Relativposition zwischen dem ersten Verschiebeelement und dem weichmagnetischen Kopplungselement ermittelt, wobei die Signalverarbeitungseinheit wenigstens ein Goertzelfilter umfasst.

Es ist bevorzugt, dass die Signalverarbeitungseinheit so ausgebildet ist, dass mit dem zumindest einen Goertzelfilter die wenigstens eine elektrische Größe der beiden Sekundärspulen in Abhängigkeit des elektrischen Anregesignals der Primärspule bewertet und/oder analysiert wird, wobei insbesondere die Mittenfrequenz des mindestens einen Goertzelfilters im Wesentlichen der Frequenz der Anregespannung und/oder des Anregestroms an/durch die Primärspule entspricht.

Die Signalverarbeitungseinheit weist vorzugsweise mindestens einen Analog-/Digitalwandler auf, mit welchem die wenigstens eine elektrische Größe der beiden Sekundärspulen als erstes digitales Sekundärspulensignal und als zweites digitales Sekundärspulensignal digitalisiert werden, wobei die Signalverarbeitungseinheit eine Fensterfunktion aufweist, insbesondere eine Hanning-Fensterfunktion, mit welcher jeweils eine Fensterung des ersten und des zweiten digitalen Sekundärspulensignals durchgeführt werden. Besonders bevorzugt ist die Signalverarbeitungseinheit so ausgebildet, dass nach der Fensterung des ersten und des zweiten digitalen Sekundärspulensignals zumindest diese beiden Signale jeweils von einem Goertzelfilter gefiltert werden, wonach eine Summenbildung und eine Differenzbildung des Ergebnisses des Goertzelfilters durchgeführt wird, wonach der Quotient aus dem Differenzsignal durch das Summensignal gebildet wird.

Der Goertzelfilter ist vorzugsweise so ausgebildet, dass er eine Bandfilterung hinsichtlich einer Mittenfrequenz und eine Dezimierung durchführt.

Durch die vorzugsweise Fensterung mit einer Fensterfunktion, z.B. dem Hanning-Fenster, besteht darüber hinaus insbesondere die Möglichkeit störende Seitenfrequenzen rechnerisch auszuwerten. Stimmt das Amplitudenverhältnis der Seitenbänder und der Mittenfrequenz nicht überein, so kann das Signal gestört sein.

Es ist bevorzugt, dass die Signalverarbeitungseinheit eine Taktgebereinheit umfasst, wobei in Abhängigkeit eines Taktsignals dieser Taktgebereinheit sowohl die Anregespannung und/oder der Anregestrom an/durch die Primärspule erzeugt werden, als auch die Mittenfrequenz des wenigstens einen Goertzelfilters definiert werden.

Die Wegsensoranordnung ist vorzugsweise redundant ausgebildet und weist vorzugsweise zwei erste Sekundärspulen und zwei zweite Sekundärspulen auf, welche mit der Signalverarbeitungseinheit oder mit jeweils einer Signalverarbeitungseinheit verbunden sind.

Es ist bevorzugt, dass der wenigstens eine Goertzelfilter so ausgelegt ist, dass er hinsichtlich einer einzigen Frequenz filtert.

Es ist zweckmäßig, dass der wenigstens eine Goertzelfilter so ausgelegt ist, dass er als dezimierendes Bandpassfilter wirkt.

Die Wegsensoranordnung umfasst vorzugsweise ein zusätzliches, zweites weichmagnetisches Kopplungselement, insbesondere unbeweglich angeordnet, das so ausgebildet und angeordnet ist, dass es der Verbesserung des magnetischen Rückschlusses des Magnetfelds durch das erste weichmagnetische Kopplungselemente und die Spulen dient.

Das weichmagnetische Kopplungselement, insbesondere das mit den Spulen direkt gekoppelte, weist bevorzugt eine Längsausdehnung auf, bezüglich welcher es im Wesentlichen parallel zur Messrichtung der Wegsensoranordnung angeordnet ist.

Die zwei Sekundärspulen sind bezüglich der Messrichtung vorzugsweise an den beiden Enden des Wickelkörpers der Primärspule angeordnet.

Es ist bevorzugt, dass der erste Positionsgebermagnet Teil des zugeordneten Verschiebeelements ist, wobei das Verschiebeelement insbesondere als Kolben ausgebildet ist, und/oder dass der erste Positionsgebermagnet in das Verschiebeelement, insbesondere in einen Kolben, eingelassen ist und/oder an diesem befestigt ist.

Das Verschiebeelement ist bevorzugt als Kolben oder Betätigungselement oder Betätigungsstange ausgebildet und dient insbesondere der Kraftübertragung.

Die Wegsensoranordnung ist zweckmäßigerweise Teil eines Kraftfahrzeugbremssystems, wobei das (erste) Verschiebeelement, umfassend den ersten Positionsgebermagneten, mit einer Betätigungseinrichtung bzw. einer Bremspedaleinrichtung gekoppelt und/oder verbunden ist.

Die zumindest drei Spulen, Primärspule und wenigstens erste und zweite Sekundärspule, umgeben zweckmäßigerweise das weichmagnetische Kopplungselement und sind insbesondere direkt auf dieses gewickelt ausgebildet und angeordnet und dabei besonders bevorzugt mit einem elektrisch isolierenden Material vergossen oder mit einem Lack fixiert.

Die Primärspule ist bevorzugt an eine Wechselstromquelle oder Wechselspannungsquelle angeschlossen, welche einen Wechselstrom oder eine Wechselspannung mit im Wesentlichen konstanter Amplitude des Stroms oder der Spannung und definierter Wechselfrequenz treibt.

Unter einem Goertzelfilter wird vorzugsweise eine elektronische Einheit und/oder Softwareeinheit verstanden, welche einen Goertzel-Algorithmus implementiert hat.

Unter einem Goertzelfilter bzw. Goertzel- Algorithmus wird vorzugsweise eine 1-Punkt diskrete Fouriertransformation verstanden, nach einem definierten Algorithmus, die als Ergebnis die Amplitude des zugeführten Signals liefert. Die Phaseninformation kann insbesondere entfallen. Im Gegensatz zur FFT, fast Fourier Transformation, bietet sich der Goertzel-Algorithmus stets an, wenn eine bekannte, diskrete Frequenz ausgewertet werden soll. Dies ist in der Wegsensoranordnung der Fall. Es kann sodann insbesondere eine steilflankig, frequenzselektive Amplitudenberechnung auch auf einfachen, preiswerten µC erfolgen.

Die Wegsensoranordnung ist bevorzugt so ausgebildet, dass die Primärspule mit wenigstens zwei unterschiedlichen überlagerten Frequenzen, also einer ersten und einer zweiten Anregefrequenz, angeregt wird und der Primärspule eine erste Sekundärspule, eine zusätzliche erste Sekundärspule, eine zweite Sekundärspule sowie eine zusätzliche zweite Sekundärspule zugeordnet sind, die mit der Primärspule alle über das weichmagnetische Kopplungselement magnetisch gekoppelt sind. Den beiden ersten Sekundärspulen sowie den beiden zweiten Sekundärspulen ist dabei jeweils eine Signalverarbeitungseinheit zugeordnet, welche jeweils ein Goertzelfilter umfasst, wobei das Goertzelfilter der ersten Signalverarbeitungseinheit als Mittenfrequenz die erste Anregefrequenz aufweist und das Goertzelfilter der zweiten Signalverarbeitungseinheit die zweite Anregefrequenz als Mittenfrequenz aufweist. Insbesondere erfassen und berechnet also die Kombination aus erster Sekundärspule und zusätzlicher erster Sekundärspule mit der ersten Signalverarbeitungseinheit die Position und/oder die Auslenkung auf Basis der ersten Anregefrequenz und zusätzlich, redundant erfasst und berechnet die Kombination aus zweiter Sekundärspule und zusätzlicher zweiter Sekundärspule mit der zweiten Signalverarbeitungseinheit die Position und/oder die Auslenkung auf Basis der zweiten Anregefrequenz. Erste und zweite Signalverarbeitungseinheit umfassen dabei besonders bevorzugt beide jeweils eine Fensterfunktion, die dem Goertzelfilter vorgeschaltet ist, beispielsweise eine Hanning Fensterfunktion, sowie jeweils ganz besonders bevorzugt eine Differenzbildung und eine Summenbildung mit nachgeschalteter Quotientenbildung zur Berechnung der Position und/oder Auslenkung bzw. des entsprechenden Signals.

### Bezugszeichenliste

- 1: Primärspule
- 2: weichmagnetisches Kopplungselement
- 3 bzw. 3a: erste Sekundärspule
- 3b: zusätzliche erste Sekundärspule
- 4 bzw. 4a: zweite Sekundärspule
- 4b: zusätzliche zweite Sekundärspule
- 5: Signalverarbeitungseinheit
- 6: Goertzelfilter
- 7: Positionsgebermagnet
- 8: Fensterfunktion, insbesondere Hanning Fensterfunktion
- 9: Summenbildung
- 10: Differenzbildung
- 11: Quotientenbildung
- 12: Taktgebereinheit
- 13: A/D-Wandler
- 14: elektrische Anregequelle

Es zeigen beispielhaft in schematischer Darstellung
Fig. 1 einen Differenztrafo-Wegsensor als Wegsensoranordnung, ausgeführt mit einem Permanentmagneten zur Markierung bzw. Erfassung der Weglänge,

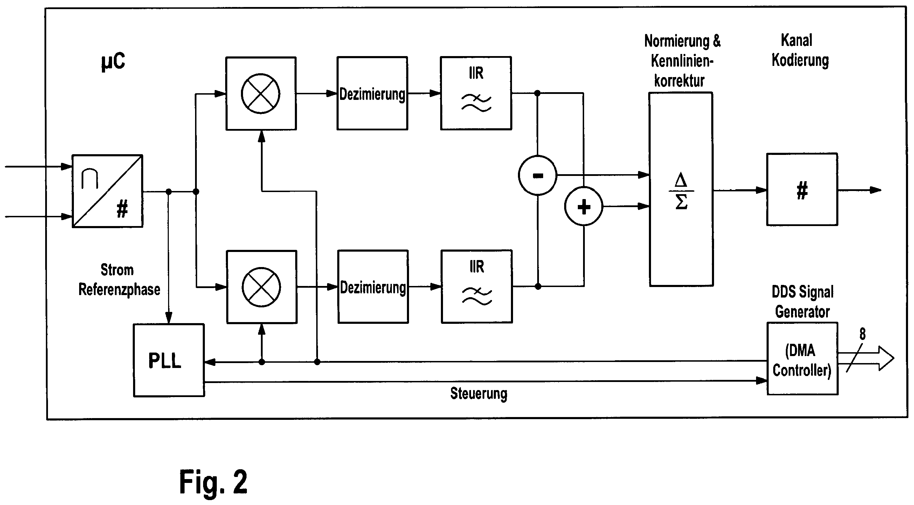

Fig. 2 eine Signalverarbeitungseinheit mit einem Synchrondemodulator in doppelter Ausführung zur synchronen Gleichrichtung der Trafo-Sekundärspannungen U1∼,U2∼, dabei eine beispielhafte Realisierung mit digitalem Signalprozessor, gemäß Stand der Technik,
Fig. 3 das beispielhafte Blockdiagramm der erfindungsgemäßen Signalverarbeitungseinheit der Wegsensoranordnung mit implementierten Goertzelfiltern bzw. Goertzel- Algorithmus, beispielsweise in Software,

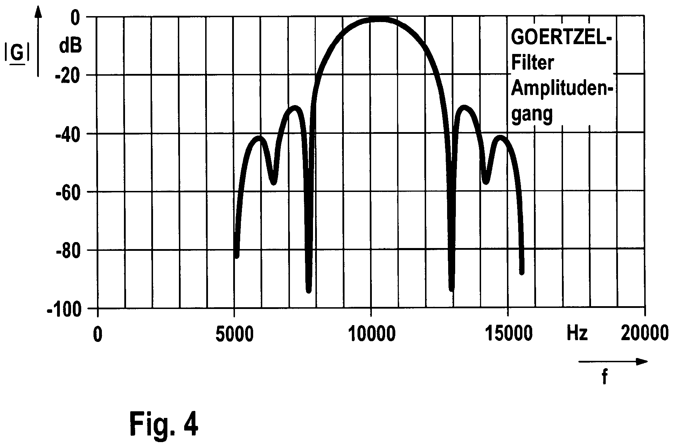

Fig. 4 das mit dieser Wegsensoranordnung und dessen Signalverarbeitungsschaltung aus Fig. 3 realisierte Durchlassverhalten (Beispielkonfiguration) als Amplitudengang,
Fig. 5 eine Wegsensoranordnung mit einer redundanten Ausbildung, bei welcher zwei erste und zwei zweite Sekundärspulen der Primärspule zugeordnet sind und den zwei ersten und den zwei zweiten Sekundärspulen jeweils eine Signalverarbeitungseinheit zugeordnet ist, und

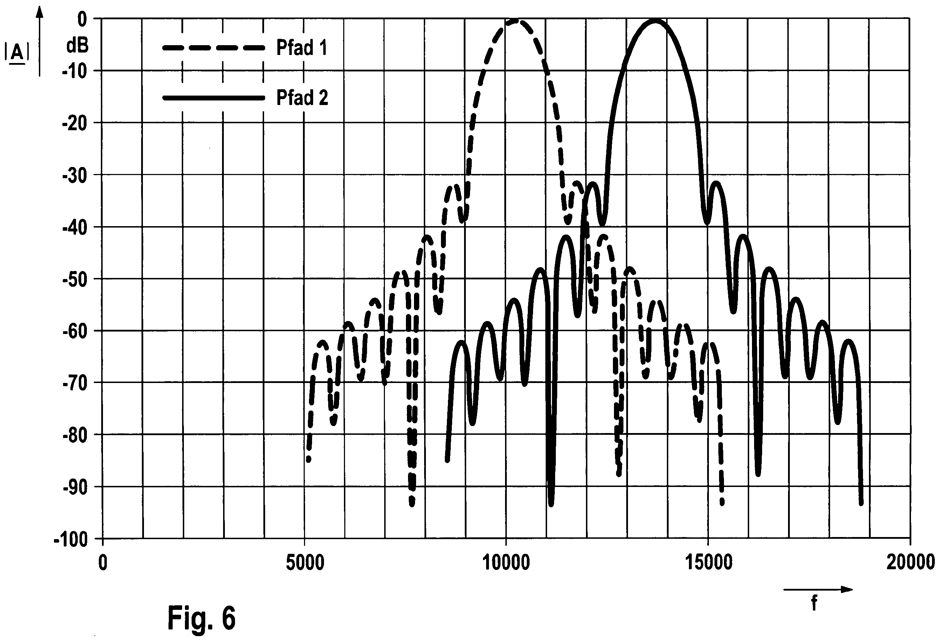

Fig. 6 den Amplitudengang der mittels des jeweiligen Goertzel-Filters gefilterten Signale der beiden Pfade 1 und 2, welche jeweils als Signalverarbeitungspfade durch die beiden Signalverarbeitungseinheiten und unterschiedlichen Mittenfrequenzen der Goertzelfilter realisiert sind. Durch die hohe Selektivität des Filters, beispielsweise ca. 60dB, erhält völlig autonome Signalverarbeitungseinheiten bzw. - pfade von denen auch bei Ausfall einer Anregefrequenz der andere Pfad unbeeinflusst bleibt.

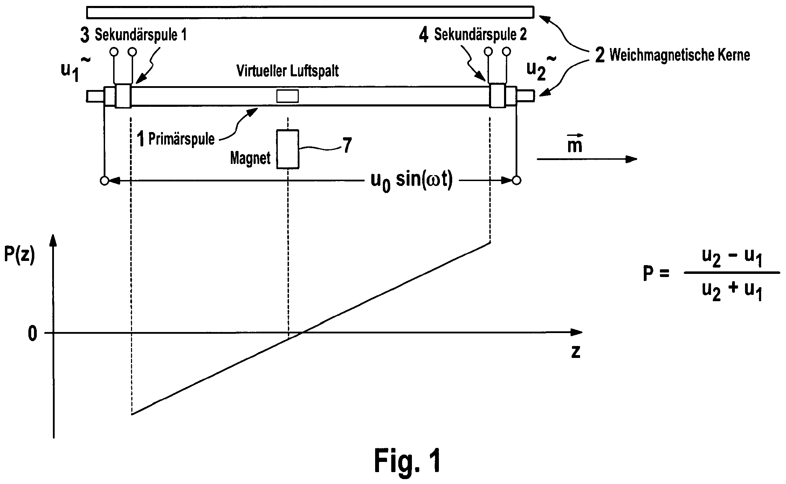

Fig. 1 zeigt eine Wegsensoranordnung beispielhaft als Differentialtransformator ausgebildet, bei welcher ein Permanentmagnet als Positionsgebermagnet 7 bewegt wird, der an einem nicht dargestellten Verschiebeelement befestigt ist, wie beispielsweise einer Betätigungsstange oder einem Kolben. Primärspule 1 ist mit erster und zweiter Sekundärspule 3, 4 über weichmagnetisches Kopplungselement 2 magnetisch gekoppelt, wobei die beispielhafte Wegsensoranordnung noch ein zusätzliches weichmagnetisches Kopplungselement, das so ausgebildet und angeordnet ist, dass es der Verbesserung des magnetischen Rückschlusses des Magnetfelds durch das erste weichmagnetische Kopplungselement 2 und die Spulen 1, 3 und 4 dient.

Das weichmagnetische Kopplungselement 2 weist eine Längsausdehnung auf, bezüglich welcher es im Wesentlichen parallel zur Messrichtung m der Wegsensoranordnung angeordnet ist.

Die Position P des Positionsgebermagneten 7 bzw. die Auslenkung der Wegsensoranordnung ergibt sich aus den elektrischen Signalen der beiden Sekundärspulen, beispielgemäß aus den beiden Sekundärspannungen U1∼,U2∼ wobei sich die Position P wie formelmäßig veranschaulicht im Wesentlichen bzw. abhängig als Quotient aus der Differenz durch die Summe der beiden Spannungen U2 und U1 ergibt, welche als Werte der Spannungen in Abhängigkeit der Anregefrequenz der Primärspule 1 ermittelt bzw. berechnet werden.

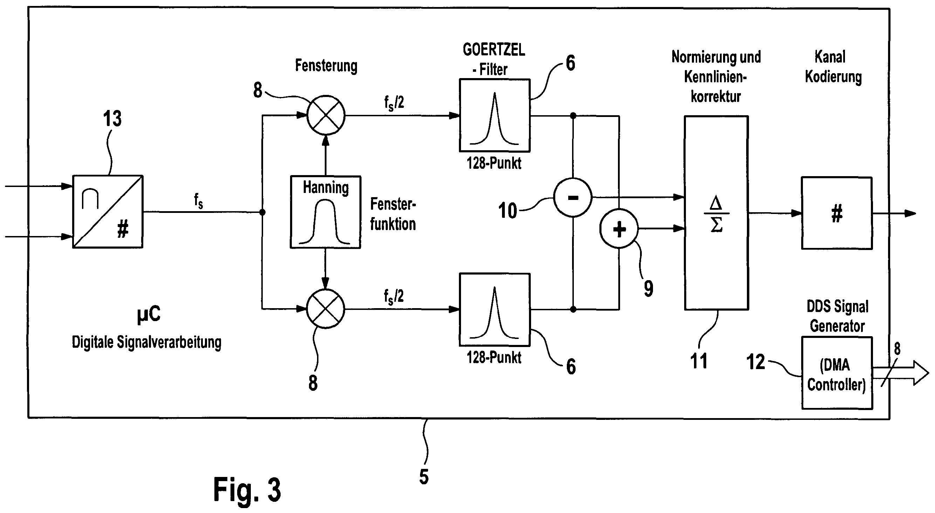

Fig. 3 zeigt dabei eine beispielhafte, schematische Realisierung der Signalverarbeitungseinheit 5 der Wegsensoranordnung, beispielhaft ausgebildet mittels eines digitalen Signalprozessors.

Die beiden Signale, beispielgemäß die Spannungssignale der ersten und zweiten Sekundärspule werden als Eingangssignale mittels Analog-/Digitalwandler 13 digitalisiert.

Diese beiden digitalen Signale werden jeweils einer Fensterfunktion 8 zugeführt, beispielgemäß einer Hanning-Fensterfunktion, mit welcher jeweils eine Fensterung des ersten und des zweiten digitalen Sekundärspulensignals - oberer und unterer Signalpfad, durchgeführt wird.

Nach der Fensterung 8 des ersten und des zweiten digitalen Sekundärspulensignals werden diese beiden Signale jeweils von einem Goertzelfilter 6 gefiltert und die Amplitude ermittelt, wonach eine Summenbildung 9 und eine Differenzbildung 10 des Ergebnisses des Goertzelfilters 6 jeweils der beiden Signale durchgeführt wird, wonach der Quotient 11 aus dem Differenzsignal durch das Summensignal gebildet wird, wobei die Bildung des Quotienten beispielgemäß einer Normierung entspricht. In Funktionsblock 11 erfolgt außerdem eine Kennlinienkorrektur. Anschließend wird eine Kanalkodierung vorgenommen, bevor die Signalverarbeitungseinheit das Ausgangssignal bereitstellt. Taktgebereinheit 12 stellt sowohl den Takt für die Berechnung der Mittenfrequenz der beiden Goertzelfilter 6 bereit, als auch die Berechnung der Anregefrequenz der nicht dargestellten Primärspule. Dabei stimmen die Mittenfrequenzen der Goertzelfilter 6 und die Anregefrequenz der Primärspule überein.

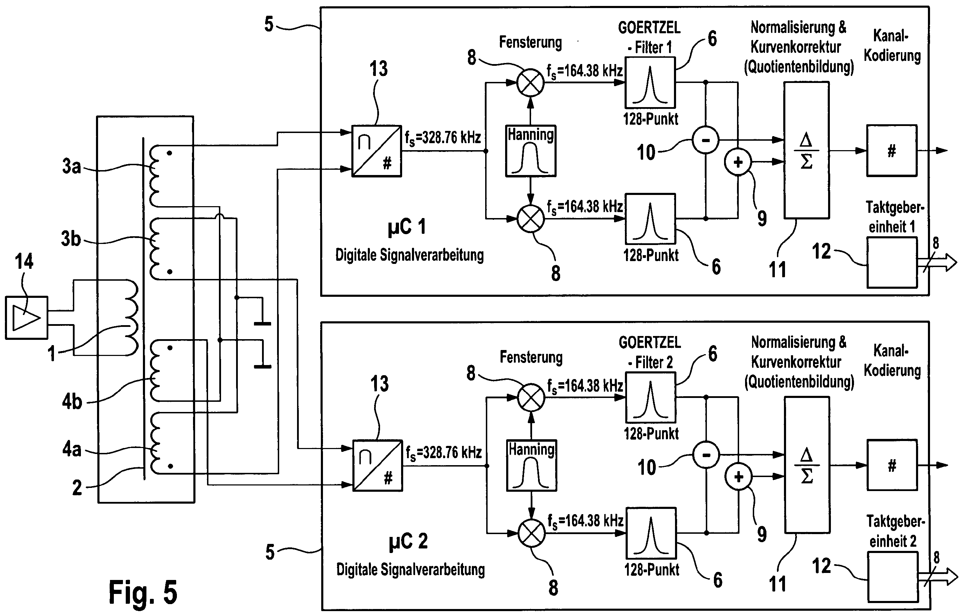

Anhand der Fig. 5 ist ein Ausführungsbeispiel der Wegsensoranordnung dargestellt, bei welchem die Primärspule 1 mit wenigstens zwei unterschiedlichen überlagerten Frequenzen, also einer ersten und einer zweiten Anregefrequenz, seitens der elektrischen Anregequelle 14, beispielhaft eine Wechselspannungsquelle, angeregt wird. Primärspule 1 sind dabei eine erste Sekundärspule 3a, eine zusätzliche erste Sekundärspule 3b, eine zweite Sekundärspule 4a sowie eine zusätzliche zweite Sekundärspule 4b zugeordnet, die mit der Primärspule 1 alle über das weichmagnetische Kopplungselement 2 magnetisch gekoppelt sind. Den beiden ersten Sekundärspulen 3a, 3b sowie den beiden zweiten Sekundärspulen 4a, 4b ist dabei jeweils eine Signalverarbeitungseinheit 5 zugeordnet, welche jeweils ein Goertzelfilter 6 umfasst, wobei das Goertzelfilter der ersten Signalverarbeitungseinheit als Mittenfrequenz die erste Anregefrequenz aufweist und das Goertzelfilter der zweiten Signalverarbeitungseinheit die zweite Anregefrequenz als Mittenfrequenz aufweist. Die Kombination aus erster Sekundärspule 3a und zusätzlicher ersten Sekundärspule 3b mit der ersten Signalverarbeitungseinheit 5, µC 1 die Position und/oder die Auslenkung auf Basis der ersten Anregefrequenz und zusätzlich, redundant erfasst und berechnet die Kombination aus zweiter Sekundärspule 4a und zusätzlicher zweiter Sekundärspule 4b mit der zweiten Signalverarbeitungseinheit 5, µC 2 die Position und/oder die Auslenkung auf Basis der zweiten Anregefrequenz. Erste und zweite Signalverarbeitungseinheit umfassen dabei jeweils einen A/D-Wandler 13 welcher die digitalisierten Signale der ersten und zusätzlichen ersten bzw. zweiten und zusätzlichen zweiten Sekundärspulen digitalisiert. Danach werden diese beiden Signal jeweils - oberer und unterer Signalpfad innerhalb der Signalverarbeitungsheit - einer Fensterfunktion 8, beispielhaft als Hanning Fensterfunktion ausgebildet, zugeführt, wonach die resultierenden Signale jeweils durch das Goertzelfilter 6 gefiltert werden. Die Amplituden, als Ergebnisse dieser gefilterten Signale, werden anschließend einer Differenzbildung 10 und eine Summenbildung 9 mit nachgeschalteter Quotientenbildung 11 zur Berechnung der Position und/oder Auslenkung bzw. des entsprechenden Signals zugeführt, wonach beispielhaft jeweils eine Kanalkodierung erfolgt. Die Taktgebereinheiten 12 der beiden Signalverarbeitungseinheiten 5 generieren unterschiedliche Taktsignale, unterschiedlicher Frequenz, wobei die elektrische Anregequelle 14 mit der Überlagerung dieser beiden Frequenzen betrieben wird und die Goertzelfilter der jeweiligen Signalverarbeitungseinheit 5, jeweils ihre Mittenfrequenzen von der eigenen Taktgebereinheit 12 beziehen.

## Patentansprüche

1. Wegsensoranordnung, umfassend zumindest eine Primärspule (1), wenigstens eine erste und eine zweite Sekundärspule (3, 4) und mindestens ein weichmagnetisches Kopplungselement (2), das die Primärspule (1) und die beiden Sekundärspulen (3, 4) magnetisch koppelt, wobei der Wegsensor so ausgebildet ist, dass eine Position und/oder Auslenkung in Abhängigkeit der magnetischen Kopplung zwischen der Primärspulen (1) und zumindest der ersten und zweiten Sekundärspule (3, 4) erfasst wird, wobei die Wegsensoranordnung eine Signalverarbeitungseinheit (5) umfasst, welche so ausgebildet ist, dass sie eine digitale Signalverarbeitung wenigstens einer elektrischen Größe der beiden Sekundärspulen (3, 4) durchführt und die Position und/oder Auslenkung ermittelt, **dadurch gekennzeichnet, dass**
die Signalverarbeitungseinheit (5) zur Bewertung
und/oder Analyse der wenigstens einen elektrischen Größe der ersten und der zweiten Sekundärspule (3, 4) zumindest jeweils ein Goertzelfilter (6) aufweist.

2. Wegsensoranordnung nach Anspruch 1, **dadurch gekennzeichnet, dass** die Wegsensoranordnung mindestens ein erstes Verschiebeelement aufweist, umfassend zumindest einen ersten Positionsgebermagnet (7), wobei das erste Verschiebeelement entlang einer Messrichtung (m) relativ zu dem weichmagnetischen Kopplungselement (2) verschiebbar angeordnet ist und die Primärspule (1) und die Sekundärspulen (3, 4) mit dem weichmagnetischen Kopplungselement (2) magnetisch gekoppelt sind und wobei das durch den ersten Positionsgebermagneten (7) erzeugte Magnetfeld das Kopplungselement (2) zumindest lokal so beeinflusst, dass die Relativposition zwischen dem ersten Verschiebeelement und dem weichmagnetischen Kopplungselement (2) durch mindestens eine der Sekundärspulen (3, 4) direkt oder indirekt erfasst wird.

3. Wegsensoranordnung nach Anspruch 1, **dadurch gekennzeichnet, dass** der Wegsensor als Differenztrafo-Wegsensor ausgebildet ist, insbesondere als LVDT "Linear Variable Differential Transformer" ausgebildet ist, wobei das weichmagnetische Kopplungselement (2) bewegbar ausgebildet ist und die Position und/oder Auslenkung dieses Kopplungselements erfasst wird.

4. Wegsensoranordnung nach mindestens einem der Ansprüche 1 bis 3, **dadurch gekennzeichnet, dass** die Signalverarbeitungseinheit (5) so ausgebildet ist, dass mit dem zumindest einen Goertzelfilter (6) die wenigstens eine elektrische Größe der beiden Sekundärspulen (3, 4) in Abhängigkeit des elektrischen Anregesignals der Primärspule (1) bewertet und/oder analysiert wird, wobei insbesondere die Mittenfrequenz des mindestens einen Goertzelfilters (6) im Wesentlichen der Frequenz der Anregespannung und/oder des Anregestroms an/durch die Primärspule (1) entspricht.

5. Wegsensoranordnung nach mindestens einem der Ansprüche 1 bis 4, **dadurch gekennzeichnet, dass** die Signalverarbeitungseinheit (5) mindestens einen Analog-/Digitalwandler (13) aufweist, mit welchem die wenigstens eine elektrische Größe der beiden Sekundärspulen (3, 4) als erstes digitales Sekundärspulensignal und als zweites digitales Sekundärspulensignal digitalisiert werden, wobei die Signalverarbeitungseinheit eine Fensterfunktion (8) aufweist, insbesondere eine Hanning-Fensterfunktion, mit welcher jeweils eine Fensterung des ersten und des zweiten digitalen Sekundärspulensignals durchgeführt werden.

6. Wegsensoranordnung nach Anspruch 5, **dadurch gekennzeichnet, dass** die Signalverarbeitungseinheit so ausgebildet ist, dass nach der Fensterung (8) des ersten und des zweiten digitalen Sekundärspulensignals zumindest diese beiden Signale jeweils von einem Goertzelfilter (6) gefiltert werden, wonach eine Summenbildung (9) und eine Differenzbildung (10) des Ergebnisses des Goertzelfilters (6) durchgeführt wird, wonach der Quotient (11) aus dem Differenzsignal durch das Summensignal gebildet wird.

7. Wegsensoranordnung nach mindestens einem der Ansprüche 1 bis 6, **dadurch gekennzeichnet, dass** die Signalverarbeitungseinheit (5) eine Taktgebereinheit (12) umfasst, wobei in Abhängigkeit eines Taktsignals dieser Taktgebereinheit (12) sowohl die Anregespannung und/oder der Anregestrom an/durch die Primärspule (1) erzeugt werden, als auch die Mittenfrequenz des wenigstens einen Goertzelfilters (6) definiert werden.

8. Wegsensoranordnung nach mindestens einem der Ansprüche 1 bis 7, **dadurch gekennzeichnet, dass** die Wegsensoranordnung redundant ausgebildet ist und zwei erste Sekundärspulen (3a, 3b) und zwei zweite Sekundärspulen (4a, 4b) aufweist, welche mit der Signalverarbeitungseinheit (5) oder mit jeweils einer Signalverarbeitungseinheit (5) verbunden sind.

9. Wegsensoranordnung nach mindestens einem der Ansprüche 1 bis 8, **dadurch gekennzeichnet, dass** der wenigstens eine Goertzelfilter (6) so ausgelegt ist, dass er hinsichtlich einer einzigen Frequenz filtert.

10. Wegsensoranordnung nach mindestens einem der Ansprüche 1 bis 9, **dadurch gekennzeichnet, dass** der wenigstens eine Goertzelfilter (6) so ausgelegt ist, dass er als dezimierendes Bandpassfilter wirkt.

11. Verwendung der Wegsensoranordnung nach mindestens einem der Ansprüche 1 bis 10 in Kraftfahrzeugen.

## Claims

1. Displacement sensor arrangement, comprising at least one primary coil (1), at least one first and one second secondary coil (3, 4) and at least one soft magnetic coupling element (2), which magnetically couples the primary coil (1) and the two secondary coils (3, 4), wherein the displacement sensor is designed such that a position and/or a deflection is recorded depending on the magnetic coupling between the primary coils (1) and at least the first and second secondary coils (3, 4), wherein the displacement sensor arrangement comprises a signal processing unit (5), which is designed such that it carries out digital signal processing of at least one electrical variable of the two secondary coils (3, 4) and determines the position and/or deflection, **characterized in that** the signal processing unit (5) comprises at least one Goertzel filter (6) respectively for assessing and/or analyzing the at least one electrical variable of the first and the second secondary coils (3, 4).

2. Displacement sensor arrangement according to Claim 1, **characterized in that** the displacement sensor arrangement comprises at least one first displacement element, comprising at least one first position encoder magnet (7), wherein the first displacement element is disposed to be displaceable along a measurement direction (m^{→}) relative to the soft magnetic coupling element (2), and the primary coil (1) and the secondary coils (3, 4) are magnetically coupled by the soft magnetic coupling element (2) and wherein the magnetic field generated by the first position encoder magnet (7) influences the coupling element (2) at least locally such that the relative position between the first displacement element and the soft magnetic coupling element (2) is detected directly or indirectly by at least one of the secondary coils (3, 4).

3. Displacement sensor arrangement according to Claim 1, **characterized in that** the displacement sensor is in the form of a differential transformer displacement sensor, especially of an LVDT, "Linear Variable Differential Transformer", wherein the soft magnetic coupling element (2) is in displaceable form and the position and/or deflection of said coupling element is recorded.

4. Displacement sensor arrangement according to any one of Claims 1 to 3, **characterized in that** the signal processing unit (5) is designed such that the at least one electrical variable of the two secondary coils (3, 4) is assessed and/or analyzed with the at least one Goertzel filter (6) depending on the electrical excitation signal of the primary coil (1), wherein especially the center frequency of the at least one Goertzel filter (6) essentially corresponds to the frequency of the excitation voltage and/or of the excitation current on/through the primary coil (1).

5. Displacement sensor arrangement according to any one of Claims 1 to 4, **characterized in that** the signal processing unit comprises (5) at least one analog-to-digital converter (13), with which the at least one electrical variable of the two secondary coils (3, 4) is digitized as the first digital secondary coil signal and as the second digital secondary coil signal, wherein the signal processing unit comprises a window function (8), especially a Hanning window function, with which windowing of the first and second digital secondary coil signals respectively is carried out.

6. Displacement sensor arrangement according to Claim 5, **characterized in that** the signal processing unit is designed such that following the windowing (8) of the first and of the second digital secondary coil signals, at least said two signals are each filtered by a Goertzel filter (6), following which summation (9) and differencing (10) of the result of the Goertzel filter (6) is carried out, after which the quotient (11) of the difference signal divided by the summation signal is formed.

7. Displacement sensor arrangement according to any one of Claims 1 to 6, **characterized in that** the signal processing unit (5) comprises a clock generator unit (12), wherein both the excitation voltage and/or the excitation current on/through the primary coil (1) are generated depending on a clock signal of said clock generator unit (12), and also the center frequency of the at least one Goertzel filter (6) is defined.

8. Displacement sensor arrangement according to any one of Claims 1 to 7, **characterized in that** the displacement sensor arrangement is of redundant design and comprises two first secondary coils (3a, 3b) and two second secondary coils (4a, 4b), which are connected to the signal processing unit (5) or each of which is connected to a signal processing unit (5).

9. Displacement sensor arrangement according to any one of Claims 1 to 8, **characterized in that** the at least one Goertzel filter (6) is designed such that it filters with respect to a single frequency.

10. Displacement sensor arrangement according to any one of Claims 1 to 9, **characterized in that** the at least one Goertzel filter (6) is designed such that it acts as a decimation bandpass filter.

11. Use of the displacement sensor arrangement according to any one of Claims 1 to 10 in motor vehicles.

## Revendications

1. Ensemble capteur de déplacement comprenant au moins une bobine primaire (1), au moins une première et une deuxième bobine secondaire (3, 4) et au moins un élément de couplage (2) magnétique doux qui couple magnétiquement la bobine primaire (1) et les deux bobines secondaires (3, 4), dans lequel le capteur de déplacement est conçu de manière à détecter une position et/ou une déviation en fonction du couplage magnétique entre la bobine primaire (1) et au moins les première et deuxième bobines secondaires (3, 4), dans lequel l'ensemble capteur de déplacement comprend une unité de traitement de signal (5) qui est conçue de manière à effectuer un traitement de signal numérique d'au moins une grandeur électrique des deux bobines secondaires (3, 4) et à déterminer la position et/ou la déviation,
**caractérisé en ce que** l'unité de traitement de signal (5) comporte au moins un filtre de Goertzel (6) respectif destiné à évaluer et/ou à analyser ladite au moins une grandeur électrique des première et deuxième bobines secondaires (3, 4).

2. Ensemble capteur de déplacement selon la revendication 1, **caractérisé en ce que** l'ensemble capteur de déplacement comporte au moins un premier élément de déplacement, comprenant au moins un premier aimant capteur de position (7), dans lequel le premier élément de déplacement est disposé de manière à pouvoir se déplacer le long d'une direction de mesure (m) par rapport à l'élément de couplage magnétique doux (2), et la bobine primaire (1) et les bobines secondaires (3, 4) sont couplées magnétiquement à l'élément de couplage magnétique doux (2), et dans lequel le champ magnétique généré par le premier aimant capteur de position (7) agit sur l'élément de couplage (2) au moins localement de manière à ce que la position relative entre le premier élément de déplacement et l'élément de couplage magnétique doux (2) soit détectée directement ou indirectement par au moins l'une des bobines secondaires (3, 4).

3. Ensemble capteur de déplacement selon la revendication 1, **caractérisé en ce que** le capteur de déplacement est réalisé sous la forme d'un capteur de déplacement à transformateur différentiel, en particulier sous la forme d'un "transformateur différentiel variable linéaire", LVDT, dans lequel l'élément de couplage magnétique doux (2) est réalisé de manière à être mobile et dans lequel la position et/ou la déviation de cet élément de couplage est détectée.

4. Ensemble capteur de position selon au moins l'une quelconque des revendications 1 à 3, **caractérisé en ce que** l'unité de traitement de signal (5) est conçue de manière à évaluer et/ou analyser à l'aide d'au moins un filtre de Goertzel (6) ladite au moins une grandeur électrique des deux bobines secondaires (3, 4) en fonction du signal d'excitation électrique de la bobine primaire (1), dans lequel la fréquence centrale dudit au moins un filtre de Goertz (6) correspond en particulier sensiblement à la fréquence de la tension d'excitation et/ou du courant d'excitation appliqué à/passant à travers la bobine primaire (1).

5. Ensemble capteur de position selon au moins l'une quelconque des revendications 1 à 4, **caractérisé en ce que** l'unité de traitement de signal (5) comporte au moins un convertisseur analogique/numérique (13) au moyen duquel ladite au moins une grandeur électrique des deux bobines secondaires (3, 4) est numérisée en tant que premier signal de bobine secondaire numérique et en tant que deuxième signal de bobine secondaire numérique, dans lequel l'unité de traitement de signal comporte une fonction de fenêtre (8), en particulier une fonction de fenêtre de Hanning, avec laquelle un fenêtrage des premier et deuxième signaux de bobines secondaires numériques est respectivement réalisé.

6. Ensemble capteur de position selon la revendication 5, **caractérisé en ce que** l'unité de traitement de signal est conçue de manière à ce que, après le fenêtrage (8) des premier et deuxième signaux de bobines secondaires numériques, au moins lesdits deux signaux soient filtrés par un filtre de Goertzel (6), à ce qu'un calcul de somme (9) et un calcul de différence (10) du résultat du filtre de Goertzel (6) soient ensuite effectués, et à ce que le quotient (11) du signal de différence par le signal de somme soit ensuite calculé.

7. Ensemble capteur de déplacement selon au moins l'une quelconque des revendications 1 à 6, **caractérisé en ce que** l'unité de traitement de signal (5) comprend une unité d'horloge (12), dans lequel la tension d'excitation et/ou le courant d'excitation appliqué à/passant à travers la bobine primaire (1) est/sont généré(s) et la fréquence centrale dudit au moins un filtre Goertz (6) est également définie en fonction d'un signal d'horloge de ladite unité d'horloge (12).

8. Ensemble capteur de déplacement selon au moins l'une quelconque des revendications 1 à 7, caractérisé en ce l'ensemble capteur de déplacement est réalisé de manière redondante et comporte deux premières bobines secondaires (3a, 3b) et deux deuxièmes bobines secondaires (4a, 4b) qui sont reliées à l'unité de traitement de signal (5) ou sont chacune respectivement reliées à une unité de traitement de signal (5).

9. Ensemble capteur de déplacement selon au moins l'une quelconque des revendications 1 à 8, **caractérisé en ce que** ledit au moins un filtre de Goertz (6) est configuré de manière à filtrer une fréquence unique.

10. Ensemble capteur de déplacement selon au moins l'une quelconque des revendications 1 à 9, **caractérisé en ce que** ledit au moins un filtre de Goertz (6) est configuré de manière à fonctionner en tant que filtre passe-bande à décimation.

11. Utilisation d'un ensemble capteur de déplacement selon au moins l'une quelconque des revendications 1 à 10 dans un véhicule automobile.
